(19) **Europäisches Patentamt**
**European Patent Office**
**Office européen des brevets**

(11) **EP 3 944 041 A1**

(12) **EUROPÄISCHE PATENTANMELDUNG**

(43) Veröffentlichungstag:
**26.01.2022 Patentblatt 2022/04**

(21) Anmeldenummer: **21186875.7**

(22) Anmeldetag: **21.07.2021**

(51) Internationale Patentklassifikation (IPC):
**G05B 19/418** (2006.01) **G01B 21/00** (2006.01)
**G01M 13/00** (2019.01)

(52) Gemeinsame Patentklassifikation (CPC):
**G05B 19/41875; G01M 13/00;** G05B 2219/32212;
G05B 2219/32218

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME**
Benannte Validierungsstaaten:
**KH MA MD TN**

(30) Priorität: **21.07.2020 DE 102020209086**

(71) Anmelder: **MTU Aero Engines AG
80995 München (DE)**

(72) Erfinder:
• **Hieber, Andreas
80995 München (DE)**
• **Farah, Philipp
80995 München (DE)**
• **Kuepper, Anna Carina
80995 München (DE)**
• **Eichler, Christian
80995 München (DE)**

(54) **BAUTEILPRÜFUNG**

(57) Die vorliegende Erfindung betrifft ein Verfahren zur Prüfung eines Bauteils (10), insbesondere eines Flugtriebwerks, mit den Schritten:
- Ermitteln (S20) eines Ist-Wertes eines ersten Parameters eines ersten Merkmals (11.1) des Bauteils;
- Ermitteln (S20) eines Ist-Wertes des ersten Parameters wenigstens eines weiteren Merkmals (11.2, 11.10, 11.12) des Bauteils;
- Ermitteln (S30) einer ersten statistischen Kenngröße dieser Ist-Werte des ersten Parameters; und
- Klassifizieren (S40, S50) des Bauteils auf Basis der ersten statistischen Kenngröße und der Ist-Werte des ersten Parameters,
wobei das Bauteil in eine vorgegebene Güteklasse klassifiziert wird (S45), falls die erste statistische Kenngröße außerhalb eines vorgegebenen ersten Kenngrößen-Bereichs liegt oder wenigstens einer dieser Ist-Werte des ersten Parameters außerhalb eines vorgegebenen ersten Werte-Bereichs liegt.

## Fig. 3

EP 3 944 041 A1

**Beschreibung**

Die vorliegende Erfindung betrifft ein Verfahren zur Prüfung eines Bauteils, insbesondere eines Flugtriebwerks, auf Basis eines oder mehrerer vorgegebener Werte-Bereiche, ein Verfahren zum Vorgeben dieses Werte-Bereichs bzw. dieser Werte-Bereiche sowie ein System und Computerprogrammprodukt zur Durchführung eines hier beschriebenen Verfahrens.

Für Parameter, beispielsweise einen Durchmesser, eine Position, Länge oder Fläche, eine Ebenheit oder dergleichen, von mehrfach vorhandenen Bauteilmerkmalen, zum Beispiel Nuten, Bohrungen oder dergleichen, werden nach betriebsinterner Praxis bisher in an sich bekannter Weise zulässige Werte-Bereiche, insbesondere in Form von Soll-Werten und zulässigen Toleranzen, vorgegeben.

Diese Werte- bzw. Toleranzbereiche werden nach betriebsinterner Praxis so (eng) vorgegeben, dass geforderte Eigenschaften, insbesondere eine Funktionalität bzw. Ausfallsicherheit, des Bauteils selbst dann (noch) vorhanden sind, wenn die entsprechenden Ist-Parameterwerte für alle Merkmale jeweils am Rand des entsprechenden Werte-Bereichs liegen.

Ein solcher Worst-case bzw. eine solche Übereinstimmung von Ist-Werten mehrfach vorhandener Bauteilmerkmale, beispielsweise Durchmesser gleichartiger Bohrungen oder ähnlichem, ist sehr unwahrscheinlich, führt jedoch, insbesondere bei Flugtriebwerk-Bauteilen, zu entsprechend engen Werte-Bereichen bzw. Toleranzen mit entsprechend hohem Fertigungsaufwand.

Die vorliegende Erfindung kann daher mit besonderem Vorteil für die Prüfung von Flugtriebwerk-Bauteilen verwendet werden, ohne jedoch hierauf beschränkt zu sein.

Eine Aufgabe einer Ausführung der vorliegenden Erfindung ist es, den Fertigungsaufwand zu reduzieren und/oder die Zuverlässigkeit geprüfter Bauteile zu erhöhen.

Diese Aufgabe wird durch ein Verfahren zur Bauteilprüfung mit den Merkmalen des Anspruchs 1 gelöst. Ansprüche 7 - 9 stellen ein Verfahren zum Vorgeben wenigstens eines Werte-Bereichs für eine hier beschriebene Bauteilprüfung sowie ein System und ein Computerprogrammprodukt zur Durchführung eines hier beschriebenen Verfahrens unter Schutz. Vorteilhafte Ausführungsformen der Erfindung sind Gegenstand der Unteransprüche.

Nach einer Ausführung der vorliegenden Erfindung weist ein Verfahren zur Prüfung eines Bauteils, in einer bevorzugten Ausführung eines Bauteils für ein, insbesondere eines, Flugtriebwerk(s), die Schritte auf:

- Ermitteln eines Ist-Wertes eines Parameters eines Merkmals des Bauteils, die vorliegend ohne Beschränkung der Allgemeinheit als erster Parameter bzw. erstes Merkmal bezeichnet werden;

- Ermitteln eines Ist-Wertes dieses ersten Parameters wenigstens eines weiteren Merkmals des Bauteils, vorzugsweise Ermitteln je eines (merkmalspezifischen) Ist-Wertes dieses ersten Parameters mehrerer weiterer Merkmale des Bauteils;
- Ermitteln einer statistischen Kenngröße dieser Ist-Werte des ersten Parameters, die vorliegend ohne Beschränkung der Allgemeinheit als erste statistische Kenngröße bezeichnet wird; und
- Klassifizieren des Bauteils auf Basis dieser ersten statistischen Kenngröße und dieser Ist-Werte des ersten Parameters,

wobei das Bauteil in eine vorgegebene Güteklasse, vorzugsweise als fehler- bzw. mangelhaft, klassifiziert wird, falls wenigstens eine der beiden Bedingungen erfüllt ist:

A1 die erste statistische Kenngröße liegt außerhalb eines vorgegebenen Kenngrößen-Bereichs, der vorliegend ohne Beschränkung der Allgemeinheit als erster Kenngrößen-Bereich bezeichnet wird;
B1 wenigstens einer dieser Ist-Werte des ersten Parameters liegt außerhalb eines vorgegebenen Werte-Bereichs, der vorliegend ohne Beschränkung der Allgemeinheit als erster Werte-Bereich bezeichnet wird.

Somit liegt einer Ausführung der vorliegenden Erfindung die Idee zugrunde, zusätzlich zur Prüfung, ob Ist-Parameterwerte innerhalb vorgegebener Werte- bzw. Toleranz-Bereiche liegen, auch zu prüfen, ob eine oder mehrere statistische Kenngrößen dieser Ist-Parameterwerte (jeweils) innerhalb eines vorgegebenen Kenngrößen-Bereichs liegen.

Liegt wenigstens einer der Ist-Parameterwerte außerhalb des entsprechenden Werte-bzw. Toleranz-Bereichs (Bedingung B1), wird das Bauteil in eine entsprechende vorgegebene Güteklasse, in einer Ausführung als fehlerhaft, klassifiziert.

Zusätzlich wird das Bauteil ebenfalls in diese Güteklasse, in einer Ausführung also als fehlerhaft, klassifiziert, wenn die bzw. wenigstens eine der statistische(n) Kenngröße(n) außerhalb des (jeweiligen) Kenngrößen-Bereichs liegt (Bedingung A1).

Dem liegt die Idee zugrunde, dass Ist-Parameterwerte von Bauteil-Merkmalen in der Regel statistische Häufigkeitsverteilungen, insbesondere wenigstens näherungsweise Normalverteilungen, aufweisen und dadurch vereinzelte Ist-Parameterwerte, die stark bzw. stärker von einem Durchschnitt abweichen, durch etwa gleich häufige andere Ist-Parameterwerte, die gegensinnig vom Durchschnitt abweichen, und/oder durch die Mehrzahl der Ist-Parameterwerte, die wenig(er stark) vom Durchschnitt abweichen, kompensiert werden können.

Weisen beispielsweise die Mehrzahl gemeinsam fungierender Bohrungen ähnliche Parameterwerte in der Nähe eines arithmetischen Mittelwertes auf, können diese Bohrungen wenige bzw. vereinzelte Bohrungen bzw. Parameterwerte, die von diesem Mittelwert stark bzw. stärker abweichen, in Hinblick auf Funktionalität bzw. Ausfallsicherheit kompensieren.

Wenn daher (zusätzlich zur Toleranzprüfung der einzelnen Ist-Werte gemäß Bedingung B1) auch (gemäß Bedingung A1) geprüft bzw. festgestellt wird, ob bzw. dass die Ist-Parameterwerte eine entsprechende bzw. ausreichende statistische Häufigkeitsverteilungen aufweisen, kann dadurch in einer Ausführung die Zuverlässigkeit geprüfter Bauteile erhöht werden.

Legt man eine entsprechende statistische Häufigkeitsverteilungen bereits bei der Tolerierung zugrunde, können vorteilhaft größere Toleranzen vorgegeben und dabei trotzdem geforderte Eigenschaften, insbesondere Funktionalitäten bzw. Ausfallsicherheiten, von Bauteilen realisiert, insbesondere sichergestellt, werden. Entsprechend können wenige bzw. vereinzelte stark bzw. stärker abweichende Ist-Parameterwerte bzw. größere Toleranzen zugelassen werden, sofern die tatsächliche Verteilung der Ist-Parameterwerte innerhalb der (Menge der) Merkmale der für die bzw. bei der Tolerierung angenommenen statistischen Häufigkeitsverteilung ausreichend entspricht, was durch die Überprüfung der statistischen Kenngröße(n) beurteilt werden kann. Durch (vorteilhafterweise größer) vorgegebene Werte- bzw. Toleranz-Bereiche kann in einer Ausführung der Fertigungsaufwand reduziert, insbesondere die Rate bemängelter Bauteile bei der Bauteilprüfung trotz ausreichender Gewährleistung geforderter Bauteileigenschaften, insbesondere -funktionalitäten bzw. -ausfallsicherheiten, reduziert werden.

Das erste Merkmal ist in einer Ausführung ein konstruktives, geometrisches und/oder Fertigungsmerkmal, in einer Weiterbildung weist es eine oder mehrere, vorzugsweise hergestellte, insbesondere bearbeitete, Innen- oder Außenflächen, in einer Ausführung Funktions- und/oder Oberflächen, in einer Ausführung eine(r) Aussparung, insbesondere Nut, Bohrung oder dergleichen, auf, kann insbesondere eine solche Fläche bzw. Aussparung sein.

Der erste Parameter kann in einer Ausführung ein(e) konstruktive(r), geometrische(r) und/oder Fertigungsparameter bzw. -größe, in einer Weiterbildung

- ein konstruktives, geometrisches bzw. Fertigungs-Maß, insbesondere ein Abstand oder eine Ausdehnung, insbesondere ein Durchmesser, eine Länge oder Fläche oder dergleichen,
- eine Form, insbesondere eine Geradheit, Ebenheit, Rundheit, Zylinderform, Profilform einer Linie, Profilform einer Fläche oder dergleichen, oder
- eine Lage, insbesondere eine Position, Koaxialität, Symmetrie, Parallelität, Rechtwinkligkeit, Neigung, einen (Gesamt)Rundlauf, (Gesamt)Planlauf oder dergleichen

aufweisen, insbesondere sein bzw. beschreiben bzw.

definieren. In einer Ausführung kann das erste Merkmal eine Nut, insbesondere zur Befestigung von Schaufel(füße)n, bzw. eine (Trag)Flanke einer solchen Nut und der erste Parameter eine (Einzel)Ebenheit einer solchen Tragflanke oder ein Tragflankenabstand einer solchen Nut sein.

Das erste Merkmal und das bzw. die weitere(n) Merkmal(e) sind in einer Ausführung gleich(artig), in einer Weiterbildung konstruktions-, typ- bzw. funktionsgleich, insbesondere also (gleichartige, insbesondere konstruktions-, typ- bzw. funktionsgleiche, gegebenenfalls bearbeitete) Funktions- und/oder Oberflächen bzw. Aussparungen, in einer Ausführung weisen das erste Merkmal und das bzw. die weitere(n) Merkmal(e) dieselben (Soll-)Formen und/oder (Soll-)Abmessungen auf.

In einer Ausführung weist das Verfahren die Schritte auf:

- Ermitteln eines Ist-Wertes eines Parameters des ersten Merkmals des Bauteils, der vorliegend ohne Beschränkung der Allgemeinheit als zweiter Parameter bezeichnet wird;
- Ermitteln eines Ist-Wertes dieses zweiten Parameters des wenigstens einen weiteren Merkmals des Bauteils, vorzugsweise Ermitteln je eines (merkmalspezifischen) Ist-Wertes dieses zweiten Parameters der mehreren weiteren Merkmale des Bauteils; und
- Ermitteln einer statistischen Kenngröße dieser Ist-Werte des zweiten Parameters, die vorliegend ohne Beschränkung der Allgemeinheit als zweite statistische Kenngröße bezeichnet wird;

wobei das Bauteil auf Basis (auch) der zweiten statistischen Kenngröße und der Ist-Werte des zweiten Parameters klassifiziert wird,
wobei das Bauteil (auch) in die vorgegebene Güteklasse, vorzugsweise also als fehler- bzw. mangelhaft, klassifiziert wird, falls wenigstens eine der beiden Bedingungen erfüllt ist:

A2 die zweite statistische Kenngröße liegt außerhalb eines vorgegebenen Kenngrößen-Bereichs, der vorliegend ohne Beschränkung der Allgemeinheit als zweiter Kenngrößen-Bereich bezeichnet wird;
B2 wenigstens einer dieser Ist-Werte des zweiten Parameters liegt außerhalb eines vorgegebenen Werte-Bereichs, der vorliegend ohne Beschränkung der Allgemeinheit als zweiter Werte-Bereich bezeichnet wird,

d.h. falls wenigstens eine der Bedingungen A1, B1, A2 oder B2 erfüllt ist.

Hierdurch können in einer Ausführung ein oder mehrere weitere bzw. zweite Parameter des ersten Merkmals und des bzw. der weiteren Merkmale in gleicher Weise überprüft und dadurch insbesondere die Zuverlässigkeit geprüfter Bauteile weiter erhöht bzw., insbesondere bei bzw. durch entsprechend größere Tolerierung bzw. (ver)größer(t)e zweite Werte-Bereiche, der Fertigungsaufwand weiter reduziert werden.

Der zweite Parameter kann in einer Ausführung ein(e) konstruktive(r), geometrische(r) und/oder Fertigungsparameter bzw. -größe, in einer Weiterbildung

- ein konstruktives, geometrisches bzw. Fertigungs-Maß, insbesondere ein Abstand oder eine Ausdehnung, insbesondere ein Durchmesser, eine Länge oder Fläche oder dergleichen,
- eine Form, insbesondere eine Geradheit, Ebenheit, Rundheit, Zylinderform, Profilform einer Linie, Profilform einer Fläche oder dergleichen, oder
- eine Lage, insbesondere eine Position, Koaxialität, Symmetrie, Parallelität, Rechtwinkligkeit, Neigung, einen (Gesamt)Rundlauf, (Gesamt)Planlauf oder dergleichen

aufweisen, insbesondere sein bzw. beschreiben bzw. definieren. In einer Ausführung kann das erste Merkmal eine Nut, insbesondere zur Befestigung von Schaufel(füße)n, bzw. eine (weitere) (Trag)Flanke einer solchen Nut und der zweite Parameter eine (Einzel)Ebenheit einer solchen Tragflanke oder ein Tragflankenabstand einer solchen Nut sein.

In einer Ausführung weist das Verfahren den Schritt auf:

- Ermitteln wenigstens einer statistischen Kenngröße der Ist-Werte des ersten Parameters, die vorliegend ohne Beschränkung der Allgemeinheit als dritte statistische Kenngröße bezeichnet wird

wobei das Bauteil auf Basis (auch) dieser dritten statistischen Kenngröße klassifiziert wird, wobei das Bauteil (auch) in die vorgegebene Güteklasse, vorzugsweise also als fehler- bzw. mangelhaft, klassifiziert wird, falls wenigstens die Bedingung erfüllt ist:

> C1 diese dritte statistische Kenngröße liegt außerhalb eines vorgegebenen Kenngrößen-Bereichs, der vorliegend ohne Beschränkung der Allgemeinheit als dritter Kenngrößen-Bereich bezeichnet wird,

d.h. falls wenigstens eine der Bedingungen A1, B1 oder C1 bzw. gegebenenfalls A2 oder B2 erfüllt ist. Dabei impliziert die Bezeichnung "dritte statistische Kenngröße" bzw. "dritter Kenngrößen-Bereich" nicht die vorgenannte zweite statistische Kenngröße bzw. den vorgenannten zweiten Kenngrößen-Bereich, sondern dient lediglich der kompakteren Darstellung.

Zusätzlich oder alternativ weist das Verfahren in einer Ausführung den Schritt auf:

- Ermitteln wenigstens einer statistischen Kenngröße der Ist-Werte des zweiten Parameters, die vorliegend ohne Beschränkung der Allgemeinheit als vierte statistische Kenngröße bezeichnet wird

wobei das Bauteil auf Basis (auch) dieser vierten statistischen Kenngröße klassifiziert wird, wobei das Bauteil (auch) in die vorgegebene Güteklasse, vorzugsweise also als fehler- bzw. mangelhaft, klassifiziert wird, falls wenigstens die Bedingung erfüllt ist:

> C2 diese vierte statistische Kenngröße liegt außerhalb eines vorgegebenen Kenngrößen-Bereichs, der vorliegend ohne Beschränkung der Allgemeinheit als vierter Kenngrößen-Bereich bezeichnet wird.

d.h. falls wenigstens eine der Bedingungen A1, B1 oder C2 oder gegebenenfalls A2, B2 bzw. C1 erfüllt ist. Dabei impliziert die Bezeichnung "vierte statistische Kenngröße" bzw. "vierter Kenngrößen-Bereich" nicht die vorgenannte dritte statistische Kenngröße bzw. den vorgenannten dritten Kenngrößen-Bereich, sondern dient lediglich der kompakteren Darstellung.

Durch die Berücksichtigung bzw. Überprüfung einer oder mehrerer weiterer statistischer Kenngrößen kann in einer Ausführung die Zuverlässigkeit geprüfter Bauteile weiter erhöht bzw., insbesondere bei bzw. durch entsprechend größere Tolerierung bzw. (ver)größer(t)e erste bzw. zweite Werte-Bereiche, der Fertigungsaufwand weiter reduziert werden.

In einer Ausführung weisen die erste statistische Kenngröße und/oder die zweite statistische Kenngröße und/oder die dritte statistische Kenngröße und/oder die vierte statistische Kenngröße (jeweils) ein oder mehrere statistische Lagemaße, insbesondere

- wenigstens ein, vorzugsweise arithmetisches, Mittel und/oder
- wenigstens eine Quantile, insbesondere einen Median, einer Quartile, Dezile, Perzentille oder dergleichen,

auf.

Zusätzlich oder alternativ weisen in einer Ausführung die erste statistische Kenngröße und/oder die zweite statistische Kenngröße und/oder die dritte statistische Kenngröße und/oder die vierte statistische Kenngröße (jeweils) ein oder mehrere statistische Streuungsmaße, insbesondere wenigstens eine Varianz und/oder wenigstens eine, vorzugsweise empirische, Standardabweichung, auf.

Durch solche statistische Kenngrößen, insbesondere statistische Kenngrößen, die wenigstens ein statistisches Lagemaß und wenigstens ein statistisches Streuungsmaß aufweisen, kann in einer Ausführung das Vorhandensein vorteilhafter, insbesondere ausreichender bzw. bei der Tolerierung bzw. Vorgabe des ersten und/oder zweiten Werte- bzw. Toleranz-Bereichs zugrundegelegter bzw. berücksichtigter statistischer Häufigkeitsverteilungen, besonders vorteilhaft, insbesondere zuverlässig und/oder mit geringem Aufwand, geprüft werden.

Zusätzlich oder alternativ weisen in einer Ausführung die erste statistische Kenngröße und/oder die zweite statistische Kenngröße und/oder die dritte statistische Kenngröße und/oder die vierte statistische Kenngröße (jeweils) einen oder mehrere vorgegebene Toleranzwerte, insbesondere

- wenigstens einen oberen Toleranzwert, insbesondere eine maximal zulässige Abweichung von einem Soll-Wert nach oben oder einen maximalen zulässigen Wert; und/oder
- wenigstens einen unteren Toleranzwert, insbesondere eine maximal zulässige Abweichung von einem bzw. dem Soll-Wert nach unten oder einen minimalen zulässigen Wert; und/oder
- wenigstens einen Toleranzwert des ersten Werte-Bereichs, insbesondere eine maximal zulässige Abweichung von einem bzw. dem Soll-Wert des ersten Werte-Bereichs oder eine Grenze des ersten Werte-Bereichs; und/oder
- wenigstens einen Toleranzwert des zweiten Werte-Bereichs, insbesondere eine maximal zulässige Abweichung von einem bzw. dem Soll-Wert des zweiten Werte-Bereichs oder eine Grenze des zweiten Werte-Bereichs;

insbesondere also

- einen oberen Toleranzwert des ersten Werte-Bereichs, insbesondere eine maximal zulässige Abweichung von einem bzw. dem Soll-Wert des ersten Werte-Bereichs nach oben oder eine obere Grenze des ersten Werte-Bereichs; und/oder

- einen unteren Toleranzwert des ersten Werte-Bereichs, insbesondere eine maximal zulässige Abweichung von einem bzw. dem Soll-Wert des ersten Werte-Bereichs nach unten oder eine untere Grenze des ersten Werte-Bereichs; und/oder

- einen oberen Toleranzwert des zweiten Werte-Bereichs, insbesondere eine maximal zulässige Abweichung von einem bzw. dem Soll-Wert des zweiten Werte-Bereichs nach oben oder eine obere Grenze des zweiten Werte-Bereichs; und/oder

- einen unteren Toleranzwert des zweiten Werte-Bereichs, insbesondere eine maximal zulässige Abweichung von einem bzw. dem Soll-Wert des zweiten Werte-Bereichs nach unten oder eine untere Grenze des zweiten Werte-Bereichs;

auf.

Durch solche von Toleranzwerten der Werte-Bereiche abhängige statistische Kenngrößen kann in einer Ausführung das Vorhandensein vorteilhafter, insbesondere ausreichender bzw. bei der Tolerierung bzw. Vorgabe des ersten und/oder zweiten Werte- bzw. Toleranz-Bereichs zugrundegelegter bzw. berücksichtigter statistischer Häufigkeitsverteilungen, besonders vorteilhaft, insbesondere zuverlässig und/oder mit geringem Aufwand, geprüft werden.

Zusätzlich oder alternativ hängen in einer Ausführung der erste Kenngrößen-Bereich und/oder der zweite Kenngrößen-Bereich und/oder der dritte Kenngrößen-Bereich und/oder der vierte Kenngrößen-Bereich in einer Ausführung (jeweils) von einem oder mehreren (der) vorgegebenen Toleranzwerte(n) ab, insbesondere

- von wenigstens einem oberen Toleranzwert, insbesondere einem maximalen zulässigen Wert oder einer maximal zulässigen Abweichung von einem bzw. dem entsprechenden Soll-Wert nach oben; und/oder
- wenigstens einem unteren Toleranzwert, insbesondere einem minimalen zulässigen Wert oder einer maximal zulässigen Abweichung von einem bzw. dem entsprechenden Soll-Wert nach unten; und/oder
- wenigstens einem Toleranzwert des ersten Werte-Bereichs, insbesondere einer Grenze des ersten Werte-Bereichs oder einer maximal zulässigen Abweichung von einem bzw. dem Soll-Wert des ersten Werte-Bereichs; und/oder
- wenigstens einem Toleranzwert des zweiten Werte-Bereichs, insbesondere einer Grenze des zweiten Werte-Bereichs oder einer maximal zulässigen Abweichung von einem bzw. dem Soll-Wert des zweiten Werte-Bereichs;

insbesondere also

- einem oberen Toleranzwert des ersten Werte-Bereichs, insbesondere einer oberen Grenze des ersten Werte-Bereichs oder einer maximal zulässigen Abweichung von einem bzw. dem Soll-Wert des ersten Werte-Bereichs nach oben; und/oder
- einem unteren Toleranzwert des ersten Werte-Bereichs, insbesondere einer unteren Grenze des ersten Werte-Bereichs oder einer maximal zulässigen Abweichung von einem bzw. dem Soll-Wert des ersten Werte-Bereichs nach unten; und/oder
- einem oberen Toleranzwert des zweiten Werte-Bereichs, insbesondere einer oberen Grenze des zweiten Werte-Bereichs oder einer maximal zulässigen Abweichung von einem bzw. dem Soll-Wert des zweiten Werte-Bereichs nach oben; und/oder
- einem unteren Toleranzwert des zweiten Werte-Bereichs, insbesondere einer unteren Grenze des zweiten Werte-Bereichs oder einer maximal zulässigen Abweichung von einem bzw. dem Soll-Wert des zweiten Werte-Bereichs nach unten.

Durch solche von Toleranzwerten der Werte-Bereiche abhängige Kenngrößen-Bereiche kann in einer Ausführung das Vorhandensein vorteilhafter, insbesondere ausreichender bzw. bei der Tolerierung bzw. Vorgabe des ersten und/oder zweiten Werte- bzw. Toleranz-Bereichs zugrundegelegter bzw. berücksichtigter statistischer Häufigkeitsverteilungen, besonders vorteilhaft, insbesondere zuverlässig und/oder mit geringem Aufwand, geprüft werden.

In einer Ausführung wird das Bauteil verworfen, falls es in die vorgegebene Güteklasse klassifiziert wird bzw. worden ist. Hierdurch kann in einer Ausführung die Zuverlässigkeit geprüfter Bauteile weiter erhöht bzw., insbesondere bei bzw. durch entsprechend größere Tolerierung bzw. (ver)größer(t)e erste bzw. zweite Werte-Bereiche, die Ausschussrate bzw. der Fertigungsaufwand weiter reduziert werden.

In einer anderen Ausführung wird das Bauteil nachbearbeitet bzw. hierzu vorgesehen, insbesondere aussortiert und/oder gekennzeichnet, falls es in die vorgegebene Güteklasse klassifiziert wird bzw. worden ist. Hierdurch kann in einer Ausführung die Zuverlässigkeit geprüfter Bauteile weiter erhöht bzw., insbesondere bei bzw. durch entsprechend größere Tolerierung bzw. (ver)größer(t)e erste bzw. zweite Werte-Bereiche, der Nachbearbeitungs- bzw. der Fertigungsaufwand weiter reduziert werden.

Ein Ermitteln eines Ist-Wertes eines Parameters umfasst in einer Ausführung ein ein- oder mehrmaliges Messen. Ein vorgegebener Bereich, insbesondere also der erste Werte-Bereich und/oder der zweite Werte-Bereich und/oder der erste Kenngrößen-Bereich und/oder der zweite Kenngrößen-Bereich, kann (jeweils) ein einseitig geschlossener bzw. einseitig offener Bereich oder ein beidseitig geschlossener Bereich sein bzw. nur eine (Ober- bzw. Unter)Grenze (einseitig geschlossene bzw. offen) oder eine Ober- und eine Untergrenze (beidseitig geschlossen) aufweisen.

Nach einer Ausführung der vorliegenden Erfindung wird bzw. ist der erste Werte-Bereich auf Basis bzw. in Abhängigkeit bzw. unter Zugrundelegung von einer angenommenen statistischen Häufigkeitsverteilung, in einer Weiterbildung einer angenommenen Normalverteilung, der Ist-Werte des ersten Parameters innerhalb der Merkmale des Bauteils, in einer Ausführung auf Basis eines angenommenen Soll-Wertes für die erste und/oder dritte statistische Kenngröße, insbesondere einer oder mehrerer ihrer Komponenten, vorgegeben. Zusätzlich oder alternativ wird bzw. ist nach einer Ausführung der vorliegenden Erfindung der zweite Werte-Bereich auf Basis bzw. in Abhängigkeit bzw. unter Zugrundelegung von einer angenommenen statistischen Häufigkeitsverteilung, in einer Weiterbildung einer angenommenen Normalverteilung, der Ist-Werte des zweiten Parameters innerhalb der Merkmale des Bauteils, in einer Ausführung auf Basis eines angenommenen Soll-Wertes für die zweite und/oder vierte statistische Kenngröße, insbesondere einer oder mehrerer ihrer Komponenten, vorgegeben. In einer Ausführung weist diese angenommene statistische Häufigkeitsverteilung, die bei der Vorgabe des ersten Werte-Bereichs zugrundegelegt wird bzw. ist, und/oder diese angenommene statistische Häufigkeitsverteilung, die bei der Vorgabe des zweiten Werte-Bereichs zugrundegelegt wird bzw. ist, (jeweils) mehrere voneinander abweichende Ist-Parameterwerte auf bzw. ist von einer Identität aller Ist-Parameterwerte verschieden.

In einer Ausführung wird bzw. ist der erste Werte-Bereich vergrößert, wenn eine größere Streuung der Ist-Werte des ersten Parameters angenommen wird bzw. ist, und/oder der zweite Werte-Bereich vergrößert, wenn eine größere Streuung der Ist-Werte des zweiten Parameters angenommen wird bzw. ist, beispielsweise linear abhängig von einem statistischen Streuungsmaß.

Hierdurch kann in einer Ausführung die Zuverlässigkeit geprüfter Bauteile erhöht bzw. der Fertigungsaufwand reduziert werden.

Nach einer Ausführung der vorliegenden Erfindung ist ein System, insbesondere hard- und/oder software-, insbesondere programmtechnisch, zur Durchführung eines hier beschriebenen Verfahrens eingerichtet und/oder weist auf:

- Mittel zum Ermitteln einer bzw. der ersten statistischen Kenngröße der ermittelten Ist-Werte eines bzw. des ersten Parameters eines bzw. des ersten Merkmals und wenigstens eines weiteren Merkmals bzw. des bzw. der weiteren Merkmale des Bauteils; und/oder
- Mittel zum Klassifizieren des Bauteils auf Basis der ersten statistischen Kenngröße und der Ist-Werte des ersten Parameters, wobei das Bauteil in eine bzw. die vorgegebene Güteklasse klassifiziert wird, falls die erste statistische Kenngröße außerhalb eines bzw. des vorgegebenen ersten Kenngrößen-Bereichs liegt oder wenigstens einer dieser Ist-Werte des ersten Parameters außerhalb eines bzw. des vorgegebenen ersten Werte-Bereichs liegt.

In einer Ausführung weist das System bzw. sein(e) Mittel auf:

- Mittel zum Ermitteln einer bzw. der zweiten statistischen Kenngröße der ermittelten Ist-Werte des ersten Parameters des ersten Merkmals und des bzw. der weiteren Merkmale des Bauteils; und/oder
- Mittel zum Klassifizieren des Bauteils auf Basis der zweiten statistischen Kenngröße und der Ist-Werte des zweiten Parameters, wobei das Bauteil in die vorgegebene Güteklasse klassifiziert wird, falls die zweite statistische Kenngröße außerhalb eines bzw. des vorgegebenen zweiten Kenngrößen-Bereichs liegt oder wenigstens einer dieser Ist-Werte des zweiten Parameters außerhalb eines bzw. des vorgegebenen zweiten Werte-Bereichs liegt.

Zusätzlich oder alternativ weist das System bzw. sein(e) Mittel in einer Ausführung auf:

- Mittel zum Ermitteln wenigstens einer bzw. der dritten statistischen Kenngröße der ermittelten Ist-Werte des ersten Parameters des ersten Merkmals und des bzw. der weiteren Merkmale des Bauteils; und/oder

- Mittel zum Ermitteln wenigstens einer bzw. der vierten statistischen Kenngröße der ermittelten Ist-Werte des zweiten Parameters des ersten Merkmals und des bzw. der weiteren Merkmale des Bauteils; und/oder

- Mittel zum Klassifizieren des Bauteils auf Basis der dritten statistischen Kenngröße, wobei das Bauteil in die vorgegebene Güteklasse klassifiziert wird, falls die dritte statistische Kenngröße außerhalb eines bzw. des vorgegebenen dritten Kenngrößen-Bereichs liegt; und/oder

- Mittel zum Klassifizieren des Bauteils auf Basis der vierten statistischen Kenngröße, wobei das Bauteil in die vorgegebene Güteklasse klassifiziert wird, falls die vierte statistische Kenngröße außerhalb eines bzw. des vorgegebenen vierten Kenngrößen-Bereichs liegt.

Zusätzlich oder alternativ weist das System bzw. sein(e) Mittel in einer Ausführung auf:

- Mittel zum Vorgeben des ersten Werte-Bereichs auf Basis einer bzw. der angenommenen statistischen Häufigkeitsverteilung der Ist-Werte des ersten Parameters innerhalb der Merkmale des Bauteils und/oder des zweiten Werte-Bereichs auf Basis einer bzw. der angenommenen statistischen Häufigkeitsverteilung der Ist-Werte des zweiten Parameters innerhalb der Merkmale des Bauteils.

Ein Mittel im Sinne der vorliegenden Erfindung kann hard- und/oder softwaretechnisch ausgebildet sein, insbesondere eine, vorzugsweise mit einem Speicher- und/oder Bussystem daten- bzw. signalverbundene, insbesondere digitale, Verarbeitungs-, insbesondere Mikroprozessoreinheit, insbesondere wenigstens eine CPU, und/oder ein oder mehrere Programme oder Programmmodule aufweisen. Die Verarbeitungseinheit kann dazu ausgebildet sein, Befehle, die als ein in einem Speichersystem abgelegtes Programm implementiert sind, abzuarbeiten, Eingangssignale von einem Datenbus zu erfassen und/oder Ausgangssignale an einen Datenbus abzugeben. Ein Speichersystem kann ein oder mehrere, insbesondere verschiedene, Speichermedien, insbesondere optische, magnetische, Festkörper- und/oder andere nichtflüchtige Medien aufweisen. Das Programm kann derart beschaffen sein, dass es die hier beschriebenen Verfahren verkörpert bzw. auszuführen imstande ist, sodass die Verarbeitungseinheit die Schritte solcher Verfahren ausführen kann. Ein Computerprogrammprodukt kann in einer Ausführung ein, insbesondere nichtflüchtiges, Speichermedium zum Speichern eines Programms bzw. mit einem darauf gespeicherten Programm aufweisen, insbesondere sein, wobei ein Ausführen dieses Programms ein System bzw. eine Steuerung, insbesondere einen Computer, dazu veranlasst, ein hier beschriebenes Verfahren bzw. einen oder mehrere seiner Schritte auszuführen.

In einer Ausführung werden ein oder mehrere, insbesondere alle, Schritte des Verfahrens vollständig oder teilweise automatisiert durchgeführt, insbesondere durch das System bzw. sein(e) Mittel.

Weitere vorteilhafte Weiterbildungen der vorliegenden Erfindung ergeben sich aus den Unteransprüchen und der nachfolgenden Beschreibung bevorzugter Ausführungen. Hierzu zeigt, teilweise schematisiert:

Fig. 1      ein nach einem Verfahren nach einer Ausführung der vorliegenden Erfindung geprüftes Bauteil;

Fig. 2:     ein Detail des Bauteils der Fig. 1;

Fig. 3      das Verfahren zur Prüfung des Bauteils; und

Fig. 4      ein System zum Durchführen des Verfahrens.

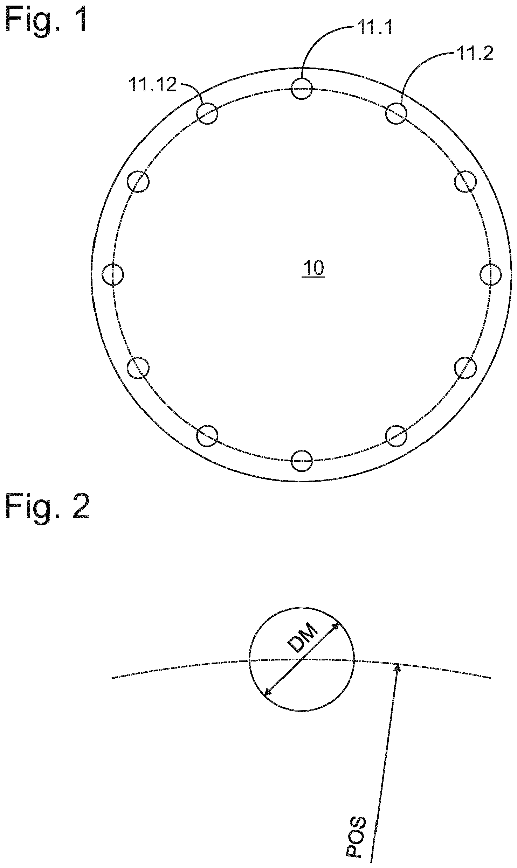

Fig. 1 zeigt einen Rotor 10 einer Gasturbine mit 12 gleichartigen Bohrungen 11.1, 11.2,..., 11.12 in einer axialen Draufsicht, Fig. 2 exemplarisch die Bohrung 11.1.

Die Bohrung 11.1 stellt ein erstes Merkmal des Rotors 10 dar, die Bohrungen 11.2,..., 11.12 jeweils ein weiteres Merkmal des Rotors.

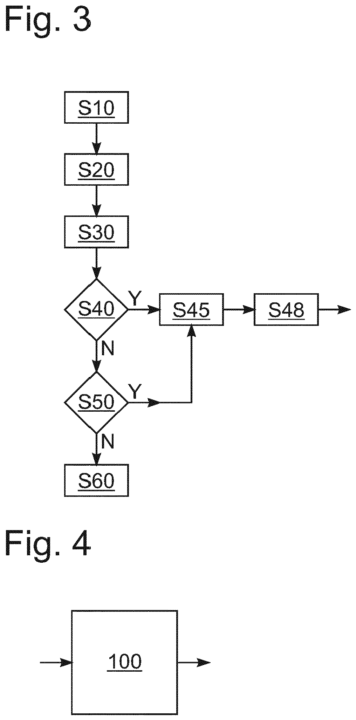

Für Parameter dieser Merkmale 11.1, 11.2,..., 11.12 werden in einem Schritt S10 (vgl. Fig. 3) jeweils Soll-Werte sowie obere und/oder untere Toleranzwerte vorgegeben, die entsprechende Werte- bzw. Toleranzbereiche definieren.

Beispielsweise wird für einen ersten Parameter DM in Form eines Durchmessers der Bohrungen ein Soll-Wert von 5 mm, eine maximal zulässige Abweichung nach oben von 0,1 mm bzw. ein oberer Toleranzwert $OT_{DM}$ von 5,1 mm und eine maximal zulässige Abweichung nach unten von 0,1 mm bzw. ein unterer Toleranzwert $UT_{DM}$ von 4,9 mm vorgegeben, was einen ersten Werte- bzw. Toleranzbereich [4,9 mm; 5,1 mm] definiert. Alternativ könnte beispielsweise die Ebenheit von Funktionsflächen von Nuten oder dergleichen vorgegeben werden, wobei der Wert der entsprechenden Ebenheit in fachüblicher Weise den zulässigen Ebenenabstand zwischen zwei parallelen Flächen angibt, die zwischen sich eine spaltförmige Toleranzzone definieren, in der die Funktionsfläche liegen soll.

Ebenfalls exemplarisch wird für einen zweiten Parameter POS in Form eines Lochkreisdurchmessers bzw. radialen Abstands der jeweiligen Bohrung zum Rotormittelpunkt ein Soll-Wert von 200 mm, eine maximal zulässige Abweichung nach oben von 0,2 mm bzw. ein oberer Toleranzwert $OT_{POS}$ von 200,2 mm und eine maximal zulässige Abweichung nach unten von 0,2 mm bzw. ein unterer Toleranzwert $UT_{POS}$ von 199,8 mm vorgegeben, was einen zweiten Werte- bzw. Toleranzbereich [199,8 mm; 200,2 mm] definiert.

Dabei werden zunächst ohne Berücksichtigung statistischer Häufigkeitsverteilungen der Parameterwerte in an sich bekannter Weise, beispielsweise auf Basis entsprechender Festigkeitsrechungen, Sicherheitskennwerte und dergleichen, jeweils Toleranzfelder für die Parameter DM, POS vorgegeben. Dies ist dem Fachmann geläufig und braucht daher hier nicht weiter beschrieben werden.

Dann wird in Schritt S10 für die Parameter jeweils eine Normalverteilung mit einem Mittelwert und einer Standardabweichung zugrundegelegt und das entsprechende, vorstehend genannte Toleranzfeld proportional zur Standardabweichung vergrößert, was die eingangs genannten Werte-bzw. Toleranzbereiche [4,9 mm; 5,1 mm] für den Parameter DM und [199,8 mm; 200,2 mm] für den Parameter POS liefert.

Schritt S10 stellt somit ein Verfahren zum Vorgeben des ersten Werte-Bereichs [4,9 mm; 5,1 mm] für den ersten Parameter DM und des zweiten Werte-Bereichs [199,8 mm; 200,2 mm] für den zweiten Parameter POS dar.

In einem Schritt S20 werden die Ist-Werte der Parameter DM, POS ermittelt.

In einem Schritt S30 werden für den ersten Parameter DM eine erste statistische Kenngröße in Form des fachüblich definierten arithmetischen Mittels $M_{DM}$ über alle 12 Bohrungen, d.h. der Ist-Werte $DM_i$, i=11.1,..., 11.12:

$$M_{DM} = (\Sigma_{i=11.1}^{11.12} DM_i)/12$$

und eine dritte statistische Kenngröße in Form eines statistischen Index $IO_{DM}$ über alle Bohrungen i=11.1, ... , 11.12:

$$IO_{DM} = (OT_{DM} - M_{DM})/(3 \cdot s_{DM})$$

mit der fachüblich definierten (empirischen) Standardabweichung

$$s_{DM} = [\Sigma_{i=11.1}^{11.12}(DM_i - M_{DM})^2/12]^{0,5}$$

sowie eine weitere dritte statistische Kenngröße in Form eines weiteren statistischen Index $IU_{DM}$ über alle Bohrungen i=11.1,..., 11.12:

$$IU_{DM} = (M_{DM} - UT_{DM})/(3 \cdot s_{DM})$$

ermittelt.

Man erkennt, dass die erste statistische Kenngröße der statistische Mittelwert $M_{DM}$ ist, die eine dritte statistische Kenngröße $IO_{DM}$ ein statistisches Lagemaß in Form dieses Mittelwerts, ein statistisches Streuungsmaß in Form der Standardabweichung $s_{DM}$ sowie den oberen Toleranzwert $OT_{DM}$ des ersten Parameters DM bzw. ersten Wertebereichs und die weitere dritte statistische Kenngröße statt des oberen den unteren Toleranzwert $UT_{DM}$ des ersten Parameters DM bzw. ersten Wertebereichs aufweist.

Zusätzlich werden in Schritt S30 für den zweiten Parameter POS eine zweite statistische Kenngröße in Form des arithmetischen Mittels $M_{POS}$ über alle 12 Bohrungen, d.h. der Ist-Werte $POS_i$, i=11.1,..., 11.12:

$$M_{POS} = (\Sigma_{i=11.1}^{11.12} POS_i)/12$$

eine vierte statistische Kenngröße in Form eines statistischen Index $IO_{POS}$ über alle Bohrungen i=11.1,...,11.12:

$$IO_{POS} = (OT_{POS} - M_{POS})/(3 \cdot s_{POS})$$

mit der (empirischen) Standardabweichung

$$s_{POS} = [\Sigma_{i=11.1}^{11.12}(POS_i - M_{POS})^2/12]^{0,5}$$

sowie eine weitere vierte statistische Kenngröße in Form eines weiteren statistischen Index $IU_{POS}$ über alle Bohrungen i=11.1,...,11.12:

$$IU_{POS} = (M_{POS} - UT_{POS})/(3 \cdot s_{POS})$$

ermittelt.

Dann wird in einem Schritt S40 geprüft, ob wenigstens einer der Ist-Werte der Parameter DM, POS außerhalb des entsprechenden Werte-Bereichs liegt, insbesondere also einer der Ist-Werte $DM_i$, i=11.1,..., 11.12 außerhalb des ersten Werte-Bereichs [4,9 mm; 5,1 mm] oder einer der Ist-Werte $POS_i$, i=11.1,...,11.12 außerhalb des zweiten Werte-Bereichs [199,8 mm; 200,2 mm].

Ist dies der Fall (S40: "Y"), wird der Rotor als fehlerhaft klassifiziert (S45) und gegebenenfalls ausgesondert oder nachbearbeitet (S48).

Andernfalls (S40: "N") wird in einem Schritt S50 geprüft, ob die erste statistische Kenngröße $M_{DM}$ außerhalb eines vorgegebenen ersten Kenngrößen-Bereichs liegt, der von dem oberen Toleranzwert $OT_{DM}$ und dem unteren Toleranzwert $UT_{DM}$ des ersten Werte-Bereichs abhängt, im Ausführungsbeispiel, ob gilt:

$$M_{DM} > OT_{DM} + 0,05 \text{ mm}$$

oder

$$M_{DM} < UT_{DM} - 0{,}05 \ mm,$$

ob die zweite statistische Kenngröße $M_{POS}$ außerhalb eines vorgegebenen zweiten Kenngrößen-Bereichs liegt, der von dem oberen Toleranzwert $OT_{POS}$ und dem unteren Toleranzwert $UT_{POS}$ des zweiten Werte-Bereichs abhängt, im Ausführungsbeispiel, ob gilt:

$$M_{POS} > OT_{POS} + 0{,}1 \ mm$$

oder

$$M_{POS} < UT_{POS} - 0{,}1 \ mm,$$

ob eine der dritten statistischen Kenngröße $IO_{DM}$, $IU_{DM}$ außerhalb eines vorgegebenen entsprechenden dritten Kenngrößen-Bereichs liegt, im Ausführungsbeispiel, ob gilt:

$$IO_{DM} < 1{,}5$$

oder

$$IU_{DM} < 1{,}5$$

oder eine der vierten statistischen Kenngrößen $IO_{POS}$, $IU_{POS}$ außerhalb des entsprechenden vierten Kenngrößen-Bereichs liegt, im Ausführungsbeispiel, ob gilt:

$$IO_{POS} < 1$$

oder

$$IU_{POS} < 1$$

Ist wenigstens eine dieser Bedingungen erfüllt (S50: "Y"), wird der Rotor ebenfalls als fehlerhaft klassifiziert (S45) und gegebenenfalls ausgesondert oder nachbearbeitet (S48).

Falls alle Ist-Werte innerhalb der vorgegebenen Werte- bzw. Toleranzbereiche liegen (S40: "N") und alle statistischen Kenngrößen innerhalb der vorgegebenen Kenngrößen-Bereiche liegen (S50: "N"), hat der Rotor diese Bauteilprüfung bestanden (S60).

Fig. 4 zeigt ein System zur wenigstens teilweise automatisierten Durchführung des oben beschriebenen Verfahrens in Form eines Rechners 100, der dazu eingerichtet ist, auf Basis eingegebener Ist-Werte den Rotor als Ausschuss oder gut zu klassifizieren.

Obwohl in der vorhergehenden Beschreibung exemplarische Ausführungen erläutert wurden, sei darauf hingewiesen, dass eine Vielzahl von Abwandlungen möglich ist.

Außerdem sei darauf hingewiesen, dass es sich bei den exemplarischen Ausführungen lediglich um Beispiele handelt, die den Schutzbereich, die Anwendungen und den Aufbau in keiner Weise einschränken sollen. Vielmehr wird dem Fachmann durch die vorausgehende Beschreibung ein Leitfaden für die Umsetzung von mindestens einer exemplarischen Ausführung gegeben, wobei diverse Änderungen, insbesondere in Hinblick auf die Funktion und Anordnung der beschriebenen Bestandteile, vorgenommen werden können, ohne den Schutzbereich zu verlassen, wie er sich aus den Ansprüchen und diesen äquivalenten Merkmalskombinationen ergibt.

Bezugszeichenliste

| 10 | Rotor (Bauteil) |
|---|---|
| 11.1, 11.2, 11.12 | Bohrung (Merkmal) |
| 100 | Rechner (System) |

**Patentansprüche**

1. Verfahren zur Prüfung eines Bauteils (10), insbesondere eines Flugtriebwerks, mit den Schritten:

   - Ermitteln (S20) eines Ist-Wertes eines ersten Parameters eines ersten Merkmals (11.1) des Bauteils;
   - Ermitteln (S20) eines Ist-Wertes des ersten Parameters wenigstens eines weiteren Merkmals (11.2, 11.10, 11.12) des Bauteils;
   - Ermitteln (S30) einer ersten statistischen Kenngröße dieser Ist-Werte des ersten Parameters; und
   - Klassifizieren (S40, S50) des Bauteils auf Basis der ersten statistischen Kenngröße und der Ist-Werte des ersten Parameters, wobei das Bauteil in eine vorgegebene Güteklasse klassifiziert wird (S45), falls die erste statistische Kenngröße außerhalb eines vorgegebenen ersten Kenngrößen-Bereichs liegt oder wenigstens einer dieser Ist-Werte des ersten Parameters außerhalb eines vorgegebenen ersten Werte-Bereichs liegt.

2. Verfahren nach dem vorhergehenden Anspruch, **gekennzeichnet durch** die Schritte:

   - Ermitteln (S20) eines Ist-Wertes eines zweiten Parameters des ersten Merkmals des Bauteils;
   - Ermitteln (S20) eines Ist-Wertes des zweiten Parameters des wenigstens einen weiteren Merkmals des Bauteils; und

- Ermitteln (S30) einer zweiten statistischen Kenngröße dieser Ist-Werte des zweiten Parameters;

wobei das Bauteil auf Basis der zweiten statistischen Kenngröße und der Ist-Werte des zweiten Parameters klassifiziert wird (S40, S50), wobei das Bauteil in die vorgegebene Güteklasse klassifiziert wird (S45), falls die zweite statistische Kenngröße außerhalb eines vorgegebenen zweiten Kenngrößen-Bereichs liegt oder wenigstens einer dieser Ist-Werte des zweiten Parameters außerhalb eines vorgegebenen zweiten Werte-Bereichs liegt.

3. Verfahren nach einem der vorhergehenden Ansprüche, **gekennzeichnet durch** wenigstens einen der Schritte:

    - Ermitteln (S30) wenigstens einer dritten statistischen Kenngröße der Ist-Werte des ersten Parameters; und/oder
    - Ermitteln (S30) wenigstens einer vierten statistischen Kenngröße der Ist-Werte des zweiten Parameters;

wobei das Bauteil auf Basis dieser dritten statistischen Kenngröße und/oder dieser vierten statistischen Kenngröße klassifiziert wird (S50), wobei das Bauteil in die vorgegebene Güteklasse klassifiziert wird (S45), falls diese dritte statistische Kenngröße außerhalb eines vorgegebenen dritten Kenngrößen-Bereichs liegt bzw. falls diese vierte statistische Kenngröße außerhalb eines vorgegebenen vierten Kenngrößen-Bereichs liegt.

4. Verfahren nach einem der vorhergehenden Ansprüche, **dadurch gekennzeichnet, dass** die erste statistische Kenngröße und/oder die zweite statistische Kenngröße und/oder die dritte statistische Kenngröße und/oder die vierte statistische Kenngröße wenigstens ein statistisches Lagemaß, insbesondere einen Mittelwert und/oder eine Quantile, wenigstens ein statistisches Streuungsmaß, insbesondere eine Varianz oder Standardabweichung, und/oder wenigstens einen vorgegebenen Toleranzwert, insbesondere einen oberen Toleranzwert und/oder einen unteren Toleranzwert und/oder des ersten oder zweiten Werte-Bereichs, aufweist und/oder der erste Kenngrößen-Bereich und/oder der zweite Kenngrößen-Bereich und/oder der dritte Kenngrößen-Bereich und/oder der vierte Kenngrößen-Bereich von wenigstens einem vorgegebenen Toleranzwert, insbesondere einem oberen Toleranzwert und/oder einem unteren Toleranzwert und/oder des ersten oder zweiten Werte-Bereichs, abhängt.

5. Verfahren nach einem der vorhergehenden Ansprüche, **dadurch gekennzeichnet, dass** das Bauteil verworfen oder nachbearbeitet wird (S48), falls es in die vorgegebene Güteklasse klassifiziert worden ist.

6. Verfahren nach einem der vorhergehenden Ansprüche, **dadurch gekennzeichnet, dass** der erste und/oder zweite Werte-Bereich nach einem Verfahren nach dem nachfolgenden Anspruch vorgegeben ist.

7. Verfahren zum Vorgeben des ersten und/oder zweiten Werte-Bereichs zur Prüfung eines Bauteils nach einem Verfahren nach einem der vorhergehenden Ansprüche, **dadurch gekennzeichnet, dass** der erste Werte-Bereich auf Basis einer angenommenen statistischen Häufigkeitsverteilung der Ist-Werte des ersten Parameters innerhalb der Merkmale des Bauteils und/oder der zweite Werte-Bereich auf Basis einer angenommenen statistischen Häufigkeitsverteilung der Ist-Werte des zweiten Parameters innerhalb der Merkmale des Bauteils vorgegeben wird (S10).

8. System (100) zur Prüfung eines Bauteils, insbesondere eines Flugtriebwerks, das zur Durchführung eines Verfahrens nach einem der vorhergehenden Ansprüche eingerichtet ist und/oder aufweist:

    - Mittel zum Ermitteln einer ersten statistischen Kenngröße ermittelter Ist-Werte eines ersten Parameters eines ersten und wenigstens eines weiteren Merkmals des Bauteils; und/oder
    - Mittel zum Klassifizieren des Bauteils auf Basis der ersten statistischen Kenngröße und der Ist-Werte des ersten Parameters, wobei das Bauteil in eine vorgegebene Güteklasse klassifiziert wird, falls die erste statistische Kenngröße außerhalb eines vorgegebenen ersten Kenngrößen-Bereichs liegt oder wenigstens einer dieser Ist-Werte des ersten Parameters außerhalb eines vorgegebenen ersten Werte-Bereichs liegt.

9. Computerprogrammprodukt mit einem Programmcode, der auf einem von einem Computer lesbaren Medium gespeichert ist, zur Durchführung eines Verfahrens nach einem der vorhergehenden Ansprüche.

# Fig. 1

# Fig. 2

# Fig. 3

# Fig. 4

Europäisches
Patentamt
European
Patent Office
Office européen
des brevets

**EUROPÄISCHER RECHERCHENBERICHT**

Nummer der Anmeldung

EP 21 18 6875

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 2 993 541 A1 (HESS THOMAS [DE] ET AL) 9. März 2016 (2016-03-09) * Zusammenfassung * * Abbildungen 1,2 * * Absätze [0006] - [0014], [0016] - [0030] * | 1-9 | INV. G05B19/418 G01B21/00 G01M13/00 |
| | ----- | | |
| A | DE 10 2004 063388 A1 (MEDAV GMBH [DE]) 13. Juli 2006 (2006-07-13) * Zusammenfassung * * Abbildung 1 * * Absätze [0017] - [0030] * | 1-9 | |
| | ----- | | |
| A | US 2004/220770 A1 (ISUMI YASUO [JP] ET AL) 4. November 2004 (2004-11-04) * Zusammenfassung * * Abbildung 19 * * Absätze [0093] - [0199] * | 1-9 | |
| | ----- | | |
| A | US 2009/157357 A1 (ALLEN JOHN R [US]) 18. Juni 2009 (2009-06-18) * Zusammenfassung * * Abbildungen 4,5,7f * * Absätze [0037] - [0058] * | 1-9 | RECHERCHIERTE SACHGEBIETE (IPC) G05B G07C |
| | ----- | | |

Der vorliegende Recherchenbericht wurde für alle Patentansprüche erstellt

| Recherchenort | Abschlußdatum der Recherche | Prüfer |
|---|---|---|
| **Den Haag** | **7. Dezember 2021** | **Hageman, Elodie** |

EPO FORM 1503 03.82 (P04C03)

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
................................................................
& : Mitglied der gleichen Patentfamilie, übereinstimmendes Dokument

**ANHANG ZUM EUROPÄISCHEN RECHERCHENBERICHT
ÜBER DIE EUROPÄISCHE PATENTANMELDUNG NR.**

EP 21 18 6875

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

07-12-2021

| Im Recherchenbericht angeführtes Patentdokument | Datum der Veröffentlichung | Mitglied(er) der Patentfamilie | Datum der Veröffentlichung |
|---|---|---|---|
| EP 2993541 A1 | 09-03-2016 | DE 102014216567 A1<br>EP 2993541 A1<br>US 2016054231 A1 | 25-02-2016<br>09-03-2016<br>25-02-2016 |
| DE 102004063388 A1 | 13-07-2006 | KEINE | |
| US 2004220770 A1 | 04-11-2004 | CN 1488933 A<br>HK 1064739 A1<br>JP 3733094 B2<br>JP 2004085216 A<br>US 2004220770 A1 | 14-04-2004<br>04-02-2005<br>11-01-2006<br>18-03-2004<br>04-11-2004 |
| US 2009157357 A1 | 18-06-2009 | AU 2003272267 A1<br>US 2004049364 A1<br>US 2005096871 A1<br>US 2006106579 A1<br>US 2007038412 A1<br>US 2009157357 A1<br>WO 2004023256 A2 | 29-03-2004<br>11-03-2004<br>05-05-2005<br>18-05-2006<br>15-02-2007<br>18-06-2009<br>18-03-2004 |

EPO FORM P0461

Für nähere Einzelheiten zu diesem Anhang : siehe Amtsblatt des Europäischen Patentamts, Nr.12/82